# FASCICULE DE BREVET EUROPEEN

(11) **EP 1 456 000 B1**
(45) Date de publication et mention de la délivrance du brevet: **08.06.2005**
(21) Numéro de dépôt: 02804934.4
(22) Date de dépôt: 17.12.2002
(51) Int. Cl.: B29C 45/00, B29D 11/00

(54) **PROCEDE DE MOULAGE PAR INJECTION D'UN ELEMENT OPTIQUE EN MATIERE SYNTHETIQUE THERMOPLASTIQUE**
VERFAHREN ZUM SPRITZGIESSEN EINES OPTISCHEN ELEMENTS AUS SYNTHETISCHEM THERMOPLASTMATERIAL
METHOD FOR THE INJECTION MOULDING OF AN OPTICAL ELEMENT MADE FROM SYNTHETIC THERMOPLASTIC MATERIAL

(30) Priorité: 17.12.2001 US 15663
(43) Date de publication de la demande: 15.09.2004
(73) Titulaire: ESSILOR INTERNATIONAL (Compagnie Générale d'Optique), F-94220 Charenton-le-Pont (FR)
(72) Inventeur: CHIU, Hao-Wen, St-Petersburg, FL 33709 (US); YANG, Hsinjin, St-Petersburg, FL 33709 (US)
(74) Mandataire: Lepelletier-Beaufond, François
(86) Numéro de dépôt international: PCT/FR2002/004387
(87) Numéro de publication internationale: WO 2003/051602

(56) Documents cités:
- GB-A- 585 576
- US-A- 2 473 588
- US-A- 5 620 635
- US-A- 6 099 765

## Description

La présente invention se rapporte à la fabrication d'éléments optiques en matière synthétique thermoplastique, tels que des lentilles ophtalmiques, des lentilles d'instruments ou des éléments d'optique de précision, obtenus par moulage-injection.

Le moulage de lentilles ophtalmiques en matière synthétique thermoplastique se fait le plus souvent par injection, ce procédé permettant la transformation directe de la matière plastique brute en lentilles finies. On sait que, dans la fabrication de lentilles optiques par un procédé de ce genre, la matière thermoplastique est préalablement chauffée pour être fondue à une température supérieure au point de transition vitreuse. Sous cette forme, la matière est introduite sous forte pression dans une empreinte, de forme et dimensions appropriées, ménagée dans un moule. On laisse ensuite la matière se refroidir pour sa solidification, avant de sortir la lentille ainsi formée du moule. Habituellement, on utilise comme matière une résine thermoplastique, telle que du polymétacrylate de méthyle, du polycarbonate ou copolymère de polycarbonate, du polynorbornène, du polystyrène, d'une polyolefine cyclique ou un de ses copolymères, etc. Un tel procédé est exposé dans le document US-A-5 620 635.

Pour obtenir des lentilles ophtalmiques possédant les qualités optiques répondant à leur destination, certaines précautions doivent être prises au cours de la fabrication, spécialement pour éviter les déformations irrégulières ou la présence de tensions internes résiduelles, ces déformations ou tensions créant une anisotropie ou des aberrations indésirables telles qu'une double réfraction.

A cet égard, on prend des soins particuliers pour la réalisation de la paroi de la cavité de moulage dans le moule. Le plus souvent, la cavité de moulage est formée sur deux coquilles qui présentent chacune une face de moulage possédant la ou les courbures appropriées, correspondant à celles que l'on entend donner à la lentille finies. Ces coquilles sont généralement en acier inoxydable, et présentent un poli optique, c'est-à-dire analogue à celui d'un miroir.

En outre, il est souvent préconisé de procéder à l'injection de matière dans la cavité de moulage en deux phases successives : une première phase de remplissage proprement dit pendant laquelle la cavité de moulage se remplit progressivement et une seconde phase de bourrage ou compression intervenant après remplissage complet de la cavité de moulage. Cette seconde phase de bourrage ou compression consiste à soumettre la matière ainsi introduite dans la cavité de moulage à une pression élevée pendant un temps donné et a pour but d'éliminer les retassures, d'assurer une densité correcte de la matière et de réduire dans une certaine mesure les tensions internes nuisibles. Lorsque cette pression de maintien est engendrée par la machine d'injection elle-même, on parle de bourrage. Lorsqu'elle résulte d'un rapprochement des coquilles de moulage, on parle de compression.

A ces précautions visant l'outillage et le mode opératoire, il convient d'ajouter celles visant le chauffage de la matière plastique et du moule pendant le moulage. Ordinairement, le moule est muni de canaux de circulation de fluide caloporteur pour réguler la température de la paroi de la cavité de moulage d'un cycle à l'autre, et pour accélérer l'évacuation des calories de la lentille moulée.

Pour éviter, par refroidissement superficiel avant la fin de l'injection, la formation d'une "peau" froide sur la matière synthétique introduite dans la cavité de moulage, il a été proposé dans le brevet US-5376317 (publié le 27 décembre 1994) de procéder, avant introduction de la matière dans la cavité de moulage, à un chauffage de la paroi de cette dernière, à une température de moulage supérieure à la température de transition vitreuse de ladite matière synthétique. En particulier, s'agissant de polycarbonate, dont la température de transition vitreuse est de l'ordre de 160°C, il est procédé à un chauffage de la paroi de la cavité de moulage à une température de l'ordre de 260°C.

Toutefois, selon l'enseignement de ce document, le chauffage de la paroi de la cavité de moulage doit être entièrement accompli avant que ne débute l'injection de matière dans la cavité de moulage. La raison en est que le but fondamental de la technique exposée dans ce document est d'empêcher la solidification superficielle de la matière fondue pendant son injection et, partant, de prévenir tant que possible l'apparition de tensions pendant le remplissage. Il n'est pas question, selon cet enseignement, de relâcher les contraintes, mais au contraire, en amont, d'éviter leur naissance.

Il résulte de cette technique un inconvénient majeur : le temps de cycle se trouve considérablement allongé par l'enchaînement séquentiel des phases de chauffage et d'injection dont les durées respectives sont peu compressibles. De plus, pendant le remplissage et malgré le chauffage de la paroi de la cavité de moulage, des tensions internes sont inévitablement induites dans la matière par la pression élevée et le fluage qu'elle subit. Ces tensions sont ensuite figées et entretenues par le refroidissement rapide de la matière qui débute immédiatement après l'injection (i.e. sans aucun délai après la phase de bourrage ou compactage).

Un but de l'invention est de réduire encore les tensions résiduelles dans la lentille ainsi moulée pour en améliorer la qualité optique sans allonger le temps de cycle, voire en le réduisant.

En vue de la réalisation notamment de ce but on propose selon l'invention un procédé de moulage par injection d'un élément optique tel qu'une lentille ophtalmique en matière synthétique thermoplastique au moyen d'un moule renfermant une empreinte de moulage, ladite matière étant préalablement fondue à une température de moulage supérieure ou égale à la température de transition vitreuse, procédé comportant, pour chaque cycle de moulage d'une lentille, les étapes de :
- porter la paroi de la cavité de moulage à une température de chauffage supérieure ou égale à la température de moulage de ladite matière,
- remplir la cavité de moulage avec ladite matière,
- en fin de remplissage, augmenter la pression de ladite matière ainsi introduite dans la cavité de moulage jusqu'à une pression de compactage,
- ramener la paroi de la cavité de moulage à une température de refroidissement pour refroidir ladite matière moulée à une température de démoulage inférieure à sa température de fusion, ladite température de refroidissement étant inférieure à ladite température de démoulage,
procédé dans lequel le remplissage de la cavité de moulage avec ladite matière débute avant que la température de chauffage ait été atteinte, et dans lequel, après avoir été toutes deux atteintes, la pression de compactage de ladite matière et la température de chauffage de la paroi de la cavité de moulage sont maintenues pendant un temps donné.

Le temps de cycle est ainsi diminué, puisque le chauffage de la paroi de la cavité de moulage intervient en parallèle de l'injection de matière. L'injection est ensuite suivie d'une phase de maintien en température pendant laquelle les tensions internes, qui ont pu apparaître pendant l'injection, sont relâchées. L'essentiel, selon l'invention, est en effet que la matière synthétique moulée, et en particulier sa surface, soit maintenue à une température supérieure à sa température de transition vitreuse après que l'injection a été effectuée, de manière à permettre un relâchement des tensions internes de la matière résultant de son injection et de sa mise en forme sous pression dans la cavité de moulage. Mais il importe peu que la température de moulage ne soit pas encore atteinte (en ce qui concerne le moule) avant le début de l'injection ; la relaxation des contraintes internes interviendra de toute façon après injection complète. Toutes les propriétés physiques et chimiques de la matière synthétique se trouvent ainsi conservées, ou plus précisément rétablies, sans perturbation.

Le remplissage peut débuter avec ou pendant la montée en température de la paroi de la cavité de moulage. Ainsi :
- soit le remplissage de la cavité de moulage avec ladite matière et la montée en température de la paroi de la cavité de moulage débutent simultanément ;
- soit le remplissage de la cavité de moulage avec ladite matière débute pendant la montée en température de la paroi de la cavité de moulage ; plus précisément alors, le remplissage débute moins de 30 s et/ou plus de 5 s après le début de la montée en température de la paroi de la cavité de moulage.

Il peut par ailleurs être avantageux que le remplissage de la cavité de moulage avec ladite matière se termine et la montée en pression de ladite matière débute avant que la température de chauffage ait été atteinte. On peut même prévoir que la pression de compactage de ladite matière soit atteinte avant que la paroi de la cavité de moulage parvienne à la température de chauffage.

S'agissant des températures de chauffage et de refroidissement et de leurs délais d'acquisition, l'expérimentation a permis de définir les valeurs suivantes qui, prises individuellement ou en combinaison, sont avantageuses notamment lorsque ladite matière est du polycarbonate :
- la température de chauffage est comprise entre 16,6 et 66,6°C (soit entre 30 et 120°F) au-dessus de la température de transition vitreuse de la matière thermoplastique utilisée ; pour du polycarbonate dont la température de transition vitreuse est de 148,9°C (soit 300°F), cela correspond à une température de chauffage comprise entre 165,5 et 215,5°C (soit entre 330 et 420°F) ;
- la température de refroidissement est comprise entre 11,1 et 55,5°C (soit entre 20 et 100°F) en dessous de la température de moulage de ladite matière ; pour du polycarbonate dont la température de transition vitreuse est de 148,9°C (soit 300°F), cela correspond à une température de refroidissement comprise entre 93,4 et 137,8°C (soit entre 280 et 200°F) ;
- le temps de montée en température de la paroi de la cavité de moulage depuis sa température de refroidissement jusqu'à sa température de chauffage est compris entre 30 s et 150 s et est de préférence d'environ 60 s ;
- le temps de descente en température de la paroi de la cavité de moulage depuis sa température de chauffage jusqu'à sa température de refroidissement est compris entre 30 s et 150 s et est de préférence d'environ 60 s ;
- le temps pendant lequel la pression de compactage de ladite matière et la température de chauffage de la paroi de la cavité de moulage sont maintenues après avoir été atteintes est supérieur à 5 s et est de préférence compris entre 10 s et 30 s.

D'autres caractéristiques et avantages de l'invention apparaîtront à la lecture de la description qui suit d'un mode de réalisation particulier donné à titre d'exemple non limitatif.

Il sera fait référence aux dessins présentés en annexe, où :
- les figures 1 et 2 sont des vues partielles de la zone contenant la cavité de moulage d'un moule pour la mise en oeuvre du procédé selon l'invention, en coupe par un plan contenant l'axe de la cavité de moulage, respectivement en configurations d'ouverture et de fermeture ;
- la figure 3 est un graphe représentant la courbe de la température de la paroi de la cavité de moulage en fonction du temps, au cours des étapes successives du procédé de moulage selon l'invention.

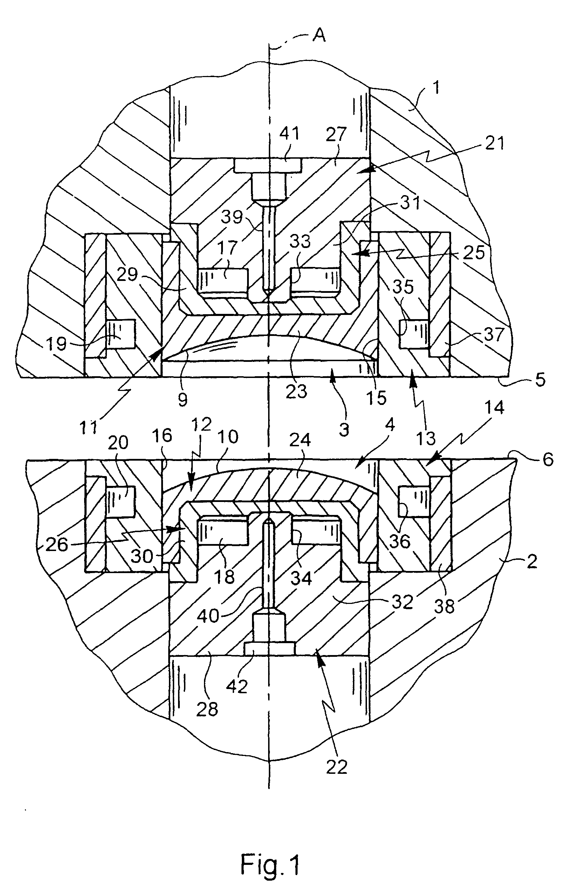

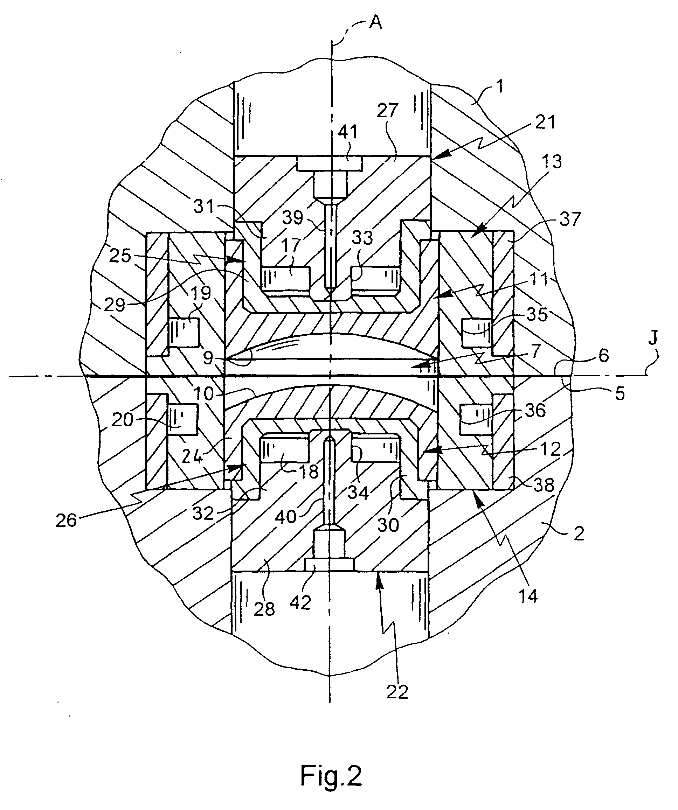

Pour mettre en oeuvre le procédé de moulage par injection selon l'invention, on utilise un moule possédant des moyens de contrôle de température précis tel que le moule décrit ci-dessous en référence aux figures 1 et 2. Toutefois, le procédé selon l'invention peut également être mis en oeuvre au moyen d'autres moules intégrant des moyens de chauffage et de refroidissement, tels que ceux décrits en détail dans les documents FR-2525525 et US-5376317 dont l'enseignement est à cet égard expressément incorporé par référence à la présente demande.

Le moule représenté aux figures 1 et 2 comporte deux demi-blocs 1, 2, possédant chacun respectivement au moins une empreinte de moulage 3, 4 de contour cylindrique d'axe A.

Les deux demi-blocs 1, 2 sont mobiles l'un par rapport à l'autre, selon par exemple un mouvement de translation suivant l'axe A, entre une configuration d'ouverture dégageant un accès direct aux empreintes 3, 4 et une configuration de fermeture dans laquelle les deux demi-blocs 1, 2 sont en contact par des faces de jonction 5, 6 suivant un plan de joint transversal noté J sur la figure 2 et dans laquelle les empreintes 3, 4 se complètent pour former la cavité de moulage 7 souhaitée.

En pratique, chaque demi-bloc 1, 2 comporte de préférence plusieurs empreintes de moulage telles que 3, 4 et, en configuration de fermeture, ces empreintes se complètent par paire pour former plusieurs cavités de moulage telles que 7 permettant le moulage simultané, avec le même moule, de plusieurs lentilles.

Chaque empreinte 3, 4 est délimitée transversalement par la face utile 9, 10 d'une coquille 11, 12. Dans l'exemple illustré aux figures, la face utile 9 de la coquille supérieure 11 est concave, tandis que la face utile 10 de la coquille inférieure 12 est convexe.

Chaque coquille 11, 12 est reçue dans une chemise tubulaire 13, 14 d'axe A qui présente une face interne cylindrique 15, 16 d'axe A délimitant latéralement l'empreinte 3, 4 en complément de la face utile 9, 10 de la coquille 11, 12. Les faces 9, 10, 15, 16 forment ainsi la paroi des empreintes 3, 4 et donc de la cavité de moulage 7.

Chaque coquille 11, 12 et la chemise 13, 14 qui lui est associée sont pourvues de moyens intrinsèques et ambivalents de transfert thermique. Par « ambivalents », on entend des moyens aptes à assurer aussi bien le chauffage que le refroidissement de la coquille 11, 12 et de sa chemise 13, 14. Par « intrinsèques », on entend des moyens qui ne sont pas d'origine extérieure mais qui affectent directement, dans leur constitution, chaque coquille 11, 12 et chaque chemise 13, 14.

Plus précisément, en l'espèce, ces moyens intrinsèques et ambivalents de transfert thermique de la coquille 11, 12 et de la chemise 13, 14 sont réalisés sous la forme de circuits internes de circulation d'un fluide caloporteur. On distingue ainsi un circuit 17, 18 pour chaque coquille 11, 12 et un circuit 19, 20 pour chaque chemise 13, 14. Cette forme d'exécution n'est bien entendu pas limitative ; on pourra par exemple prévoir des résistances, des circuits internes de circulation d'un gaz, des moyens de convection, etc.

Par ailleurs, quelle que soit leur forme d'exécution, les moyens intrinsèques et ambivalents de transfert thermique de la chemise 13, 14, c'est-à-dire en l'espèce les circuits 19, 20 pourront avantageusement être indépendants de ceux 17, 18 de la coquille 11, 12. Cette indépendance permet une régulation plus fine du gradient, non seulement dans le temps mais également dans l'espace autour de la cavité de moulage 7, de la température de la paroi de la cavité de moulage 7 formée par les faces utiles 9, 10 des coquilles 11, 12 et les faces internes 15, 16 des chemises 13, 14, en configuration de fermeture du moule.

Chaque coquille 11, 12 comporte deux parties :
- une embase 21, 22 et
- un insert amovible 23, 24 rapporté sur l'embase 21, 22 et portant la face utile 9, 10.

L'embase 21, 22 reçoit la totalité des moyens de transfert thermique de ladite coquille 11, 12, c'est-à-dire l'ensemble du circuit 17, 18. L'insert 23, 24 est donc dépourvu de tout moyen intrinsèque de transfert thermique et est ainsi exclusivement régulé thermiquement par transfert thermique avec l'embase 21, 22.

Chaque insert 23, 24 présente une forme de chapeau et coiffe, grâce à cette forme, une partie de tête 25, 26 de l'embase 21, 22, à l'exclusion de la partie de pied de cette embase.

Les moyens de transfert thermique de l'embase que constitue le circuit 17, 18 affectent la partie de tête 25, 26 de l'embase coiffée par l'insert en chapeau 23, 24.

Dans l'exemple illustré, l'embase 21, 22 comporte elle-même deux parties : un socle 27, 28 et un couvercle ou capuchon 29, 30 coiffant une portion de tête 31, 32 de diamètre réduit du socle 27, 28. Cette portion de tête 31, 32 présente à son extrémité un décrochement 33, 34 définissant avec le couvercle 29, 30 le circuit 17, 18 de circulation du fluide caloporteur, de forme annulaire d'axe A.

Un canal d'alimentation 39, 40 est ménagé dans le socle 27, 28 suivant l'axe A. Ce canal débouche dans le circuit annulaire 17, 18 et possède une entrée 41, 42 apte à recevoir un raccord (non représenté) équipant l'extrémité d'un conduit d'alimentation (non représenté) en fluide chaud ou froid. De même, un canal de retour (non visible) est ménagé dans le socle 27, 28 pour permettre l'évacuation du fluide après échange thermique.

La chemise 13, 14 possède une gorge annulaire 35, 36 ménagée en renfoncement d'une face externe cylindrique d'axe A de la chemise 13, 14. Cette gorge est fermée par un voile tubulaire 37, 38 emmanché sur la face externe de la chemise 13, 14 pour former le circuit 19, 20 de circulation du fluide caloporteur, de forme annulaire d'axe A.

Le moulage par injection d'une lentille optique en matière synthétique thermoplastique au moyen du moule qui vient d'être décrit se déroule de la manière suivante.

La matière, qui est en l'espèce du polycarbonate, est préalablement fondue à une température de moulage supérieure ou égale à sa température de transition vitreuse. Les lentilles sont ensuite moulées en série, par un succession de cycles de moulage répétés à l'identique.

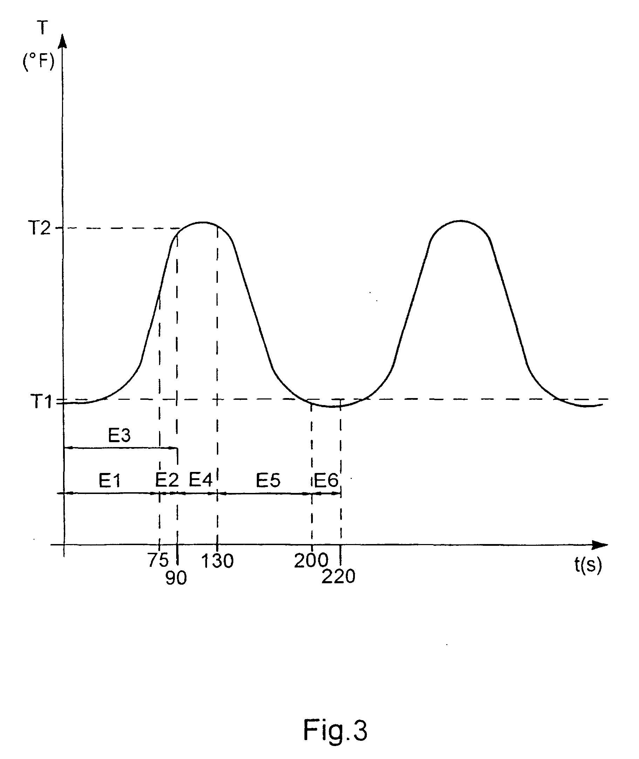

Chaque cycle de moulage d'une lentille se divise en six étapes principales, notées E1 à E6 sur la figure 3. Les étapes E1, E2, E4, E5 et E6 se succèdent, tandis que, conformément à l'invention, l'étape E3 se déroule en parallèle des étapes E1 et E2.

La première étape E1 consiste à remplir la cavité de moulage 7 avec la matière thermoplastique.

La seconde étape E2 intervient en fin de remplissage et consiste à augmenter la pression de ladite matière ainsi introduite dans la cavité de moulage jusqu'à une pression de compactage.

La troisième étape E3, qui se déroule en parallèle des étapes E1 et E2, consiste à chauffer la paroi de la cavité de moulage 7, formée des faces 9, 10, 15, 16. Celle-ci est en effet en fin de cycle (voir infra) à une température, dite de refroidissement, inférieure à la température de moulage de la matière. Pour éviter les effets de peau et permettre le relâchement des tensions internes, la paroi de la cavité de moulage 7 est portée à une température de chauffage supérieure ou égale à la température de moulage de la matière thermoplastique.

Le choix de la température de chauffage relève d'un compromis : plus elle est élevée, meilleur sera le relâchement des tensions internes, mais plus longue sera la durée du cycle. Aux essais, des résultats satisfaisants ont pu être obtenus avec une température de chauffage comprise entre 16,6 et 66,6°C (soit entre 30 et 120°F) au-dessus de la température de transition vitreuse de la matière utilisée. Pour du polycarbonate dont la température de transition vitreuse est de 148,9°C (soit 300°F), cela correspond à une température de chauffage comprise entre 165,5 et 215,5°C (soit entre 330 et 420°F), avec une préférence pour une température de chauffage de 193,3°C (soit 380°F) environ. Par « environ » on entend à 10% près.

Le temps de montée en température de la paroi de la cavité de moulage depuis sa température de refroidissement jusqu'à sa température de chauffage est compris entre 30 s et 150 s et est de préférence d'environ 60 s.

On comprend que le fait que l'étape E3 s'effectue simultanément aux étapes E1 et E2 signifie que le remplissage débute avant que la température de chauffage de la paroi de la cavité de moulage 7 ait été atteinte. Ce chauffage « en parallèle » de l'injection (remplissage et compactage) permet de réduire sensiblement la durée du cycle.

Dans l'exemple illustré, le remplissage de la cavité de moulage avec ladite matière et la montée en température de la paroi de la cavité de moulage débutent simultanément.

On pourrait toutefois prévoir au contraire que le remplissage de la cavité de moulage avec ladite matière débute pendant la montée en température de la paroi de la cavité de moulage. Par exemple, le remplissage de la cavité de moulage avec ladite matière peut débuter plus de 60 s après le début de la montée en température de la paroi de la cavité de moulage. Mais dans ce cas, il sera alors préférable, pour ne pas augmenter les temps de cycle, que le remplissage de la cavité de moulage avec ladite matière débute moins de 30 s après le début de la montée en température de la paroi de la cavité de moulage.

Toujours dans le souci de réduire les temps de cycle, l'étape E1 de remplissage de la cavité de moulage avec ladite matière se termine et l'étape E2 de montée en pression de ladite matière débute avant la fin de l'étape E3, c'est-à-dire avant que la température de chauffage T2 ait été atteinte. Bien que cela ne soit pas le cas dans l'exemple illustré par la figure 3, on peut même prévoir que l'étape E2 se termine, c'est-à-dire que la pression de compactage de ladite matière soit atteinte avant que la température de chauffage ait été atteinte.

La quatrième étape E4 consiste à maintenir, après qu'elles ont été toutes deux atteintes, la pression de compactage de ladite matière et la température de chauffage de la paroi de la cavité de moulage pendant un temps donné.

Le temps pendant lequel la pression de compactage de ladite matière et la température de chauffage de la paroi de la cavité de moulage sont maintenues après avoir été atteintes est supérieur à 5 s et est de préférence compris entre 10 s et 30 s.

La cinquième étape E5 consiste à ramener la paroi de la cavité de moulage à une température de refroidissement pour refroidir ladite matière moulée à une température de démoulage inférieure à sa température de fusion, ladite température de refroidissement étant inférieure à ladite température de démoulage. La température de refroidissement est comprise entre 11,1 et 55,5°C (soit entre 20 et 100°F) en dessous de la température de moulage de ladite matière. Pour du polycarbonate dont la température de transition vitreuse est de 148,9°C (soit 300°F), cela correspond à une température de refroidissement comprise entre 93,4 et 137,8°C (soit entre 280 et 200°F), avec une préférence pour une température de refroidissement de 121,1°C (soit 250°F) environ.

Le temps de descente en température de la paroi de la cavité de moulage depuis sa température de chauffage jusqu'à sa température de refroidissement est compris entre 30 s et 150 s et est de préférence d'environ 60 s.

La sixième étape E6 consiste à éjecter la lentille solidifiée. A cet effet, le moule est bien entendu ouvert avant éjection puis refermé après.

## Revendications

1. Procédé de moulage par injection d'une lentille optique en matière synthétique thermoplastique au moyen d'un moule renfermant une empreinte de moulage, ladite matière étant préalablement fondue à une température de moulage supérieure ou égale à la température de transition vitreuse, procédé comportant, pour chaque cycle de moulage d'une lentille, les étapes de :
- porter la paroi de la cavité de moulage à une température de chauffage supérieure ou égale à la température de moulage de ladite matière,
- remplir la cavité de moulage avec ladite matière,
- en fin de remplissage, augmenter la pression de ladite matière ainsi introduite dans la cavité de moulage jusqu'à une pression de compactage,
- ramener la paroi de la cavité de moulage à une température de refroidissement pour refroidir ladite matière moulée à une température de démoulage inférieure à sa température de fusion, ladite température de refroidissement étant inférieure à ladite température de démoulage,
**caractérisé par le fait que** le remplissage de la cavité de moulage avec ladite matière débute avant que la température de chauffage ait été atteinte, et **par le fait que**, après avoir été toutes deux atteintes, la pression de compactage de ladite matière et la température de chauffage de la paroi de la cavité de moulage sont maintenues pendant un temps donné.

2. Procédé selon la revendication 1, dans lequel le remplissage de la cavité de moulage avec ladite matière et la montée en température de la paroi de la cavité de moulage débutent simultanément.

3. Procédé selon la revendication 1, dans lequel le remplissage de la cavité de moulage avec ladite matière débute pendant la montée en température de la paroi de la cavité de moulage.

4. Procédé selon la revendication 3, dans lequel le remplissage de la cavité de moulage avec ladite matière débute moins de 30 s après le début de la montée en température de la paroi de la cavité de moulage.

5. Procédé selon l'une des revendications 3 et 4, dans lequel le remplissage de la cavité de moulage avec ladite matière débute plus de 5 s après le début de la montée en température de la paroi de la cavité de moulage.

6. Procédé selon l'une des revendications précédentes, dans lequel le remplissage de la cavité de moulage avec ladite matière se termine et la montée en pression de ladite matière débute avant que la température de chauffage ait été atteinte.

7. Procédé selon la revendication 6, dans lequel la pression de compactage de ladite matière est atteinte avant que la température de chauffage ait été atteinte.

8. Procédé selon l'une des revendications précédentes, dans lequel la température de chauffage est comprise entre 16,6 et 66,6°C au-dessus de la température de transition vitreuse de ladite matière.

9. Procédé selon l'une des revendications précédentes, dans lequel la température de refroidissement est comprise entre 11,1 et 55,5°C en dessous de la température de moulage de ladite matière.

10. Procédé selon l'une des revendications précédentes, dans lequel le temps de montée en température de la paroi de la cavité de moulage depuis sa température de refroidissement jusqu'à sa température de chauffage est compris entre 30 s et 150 s et est de préférence d'environ 60 s.

11. Procédé selon l'une des revendications précédentes, dans lequel le temps de descente en température de la paroi de la cavité de moulage depuis sa température de chauffage jusqu'à sa température de refroidissement est compris entre 30 s et 150 s et est de préférence d'environ 60 s.

12. Procédé selon l'une des revendications précédentes, dans lequel le temps pendant lequel la pression de compactage de ladite matière et la température de chauffage de la paroi de la cavité de moulage sont maintenues après avoir été atteintes est supérieur à 5 s et est de préférence compris entre 10 s et 30 s.

## Patentansprüche

1. Formpressverfahren einer optischen Linse aus synthetischem, thermoplastischem Material mittels einer Form, einen Formhohlraum umschließend, wobei das Material vorab geschmolzen vorliegt bei einer Formtemperatur, die höher oder gleich ist zur Glasumwandlungstemperatur, wobei das Verfahren für jeden Formzyklus einer Linse die Schritte umfasst:
- Bringen der Wandung des Formhohlraums auf eine Heiztemperatur höher oder gleich zur Formtemperatur des Materials,
- Füllen des Formhohlraums mit dem Material,
- Steigern des Drucks des auf diese Weise in den Formhohlraum eingebrachten Materials bis zu einem Verdichtungsdruck am Ende des Füllens,
- Zurückbringen der Wandung des Formhohlraums auf eine Abkühltemperatur um das geformte Material bei einer Entformungstemperatur unterhalb seiner Schmelztemperatur abzukühlen, wobei die Abkühltemperatur niedriger als die Entformungstemperatur ist,
**gekennzeichnet durch** die Tatsache, dass das Füllen des Fomahohlraums mit dem Material anfängt, bevor die Heiztemperatur erreicht ist, und **durch** die Tatsache, dass, nachdem beide erreicht sind, der Verdichtungsdruck des Materials und die Heiztemperatur der Wandung des Formhohlraums während einer gegebenen Zeit beibehalten werden.

2. Verfahren nach Anspruch 1, in dem das Füllen des Formhohlraums mit dem Material und der Temperaturanstieg der Wandung des Formhohlraums gleichzeitig beginnen.

3. Verfahren nach Anspruch 1, in dem das Füllen des Formhohlraums mit dem Material während des Temperaturanstiegs der Wandung des Formhohlraums beginnt.

4. Verfahren nach Anspruch 3, in dem das Füllen des Formhohlraums mit dem Material weniger als 30s nach dem Beginn des Temperaturanstiegs der Wandung des Formhohlraums beginnt.

5. Verfahren nach einem beliebigen der Ansprüche 3 und 4, in dem das Füllen des Formhohlraums mit dem Material mehr als 5s nach dem Beginn des Temperaturanstiegs der Wandung des Formhohlraums beginnt.

6. Verfahren nach einem beliebigen der vorangehenden Ansprüche, in dem das Füllen des Formhohlraums mit dem Material endet und der Druckanstieg des Materials beginnt, bevor die Heiztemperatur erreicht ist.

7. Verfahren nach Anspruch 6, in dem der Verdichtungsdruck des Materials erreicht wird, bevor die Heiztemperatur erreicht ist.

8. Verfahren nach einem beliebigen der vorangehenden Ansprüche, in dem die Heiztemperatur enthalten ist zwischen 16,6 und 66,6° C über der Glasumwandlungstemperatur des Materials.

9. Verfahren nach einem beliebigen der vorangehenden Ansprüche, in dem die Abkühltemperatur enthalten ist zwischen 11,1 und 55,5° C unter der Formtemperatur des Materials.

10. Verfahren nach einem beliebigen vorangehenden Ansprüche, in dem die Temperaturanstiegszeit der Wandung des Formhohlraums, ausgehend von der Abkübltemperatur davon bis zur Heiztemperatur davon, enthalten ist zwischen 30s und 150s und vorzugsweise ungefähr 60s ist.

11. Verfahren nach einem beliebigen der vorangehenden Ansprüche, in dem die Temperaturabstiegszeit der Wandung des Formhohlraums, ausgehend von der Heiztemperatur davon bis zur Abkühltemperatur davon, enthalten ist zwischen 30s und 150s und vorzugsweise ungefähr 60s ist.

12. Verfahren nach einem der vorangehenden Ansprüche, in dem die Zeit, während der der Verdichtungsdruck des Materials und die Heiztemperatur der Wandung des Formhohlraums gehalten werden, nachdem sie erreicht wurden, größer ist als 5s und vorzugsweise enthalten ist zwischen 10s und 30s.

## Claims

1. A method of injection molding a lens out of thermoplastic synthetic material by means of a mold containing a mold recess, said material being previously melted to a molding temperature higher than or equal to its vitreous transition temperature, the method comprising, for each lens molding cycle, the following steps:
• raising the wall of the mold cavity to a heating temperature higher than or equal to the molding temperature of said material;
• filling the molding cavity with said material;
• at the end of filling, increasing the pressure of said material introduced in this way into the molding cavity up to a compacting pressure; and
• bringing the wall of the molding cavity to a cooling temperature to cool said molded material down to an unmolding temperature below its molding temperature, said cooling temperature being lower than said unmolding temperature;
**characterized in that** the filling of the molding cavity with said material begins before the heating temperature has been reached, and wherein, once both the compacting pressure of said material and the heating temperature of said molding cavity have been reached, they are both maintained for a given length of time.

2. A method according to claim 1, in which the filling of the molding cavity with said material and the raising of the temperature of the molding cavity wall both begin simultaneously.

3. A method according to claim 1, in which the filling of the molding cavity with said material begins while the temperature of the molding cavity wall is being raised.

4. A method according to claim 3, in which the filling of the molding cavity with said material is started less than 30 s after beginning to raise the temperature of the molding cavity wall.

5. A method according to any one of claims 3 and 4, in which the filling of the molding cavity with said material is started more than 5 s after beginning to raise the temperature of the molding cavity wall.

6. A method according to any one of the preceding claims, in which the filling of the molding cavity with said material terminates and the rise in the pressure of said material begins before the heating temperature has been reached.

7. A method according to claim 6, in which the compacting pressure of said material is reached before the heating temperature has been reached.

8. A method according to any one of the preceding claims, in which the heating temperature lies in the range 16.6°C to 66.6°C above the vitreous transition temperature of said material.

9. A method according to any one of the preceding claims, in which the cooling temperature lies in the range 11.1°C to 55.5°C below the molding temperature of said material.

10. A method according to any one of the preceding claims, in which the time required to raise the temperature of the molding cavity wall from its cooling temperature to its heating temperature lies in the range 30 s to 150 s, and is preferably about 60 s.

11. A method according to any one of the preceding claims, in which the time required to lower the temperature of the molding cavity wall from its heating temperature to its cooling temperature lies in the range 30 s to 150 s, and is preferably about 60 s.

12. A method according to any one of the preceding claims, in which the time during which the compacting pressure of said material and the heating temperature of the mold cavity wall are maintained after they have been reached is greater than 5 s and preferably lies in the range 10 s to 30 s.
